# EUROPÄISCHE PATENTSCHRIFT

(11) **EP 3 848 212 B1**
(45) Veröffentlichungstag und Bekanntmachung des Hinweises auf die Patenterteilung: **10.07.2024**
(21) Anmeldenummer: 20212929.2
(22) Anmeldetag: 10.12.2020
(51) Int. Cl.: B60H 1/22, F24H 1/06, F23C 13/00, F23C 13/02

(54) **FAHRZEUGHEIZGERÄT UND VERFAHREN ZUM BETREIBEN DES FAHRZEUGHEIZGERÄTES**
VEHICLE HEATING DEVICE AND METHOD OF OPERATING THE SAME
APPAREIL CHAUFFANT POUR VÉHICULE ET PROCÉDURE DE SON FONCTIONNEMENT

(30) Priorität: 13.01.2020 DE 102020100512
(43) Veröffentlichungstag der Anmeldung: 14.07.2021
(73) Patentinhaber: Eberspächer Climate Control Systems GmbH, 73730 Esslingen (DE)
(72) Erfinder: BAUER, Thomas, 72581 Dettingen (DE); STROBEL, Tobias, 73087 Bad Boll (DE); EBERSPACH, Günter, 72649 Wolfschlugen (DE); BLASCHKE, Walter, 73779 Deizisau (DE)
(74) Vertreter: Ruttensperger Lachnit Trossin Gomoll

(56) Entgegenhaltungen:
- WO-A1-98/01702
- DE-A1- 102016 117 408
- DE-B- 1 291 496
- DE-B3- 102018 100 216

## Beschreibung

Die vorliegende Erfindung betrifft ein Fahrzeugheizgerät, umfassend eine Brennerbaugruppe und eine Wärmetauscherbaugruppe, wobei die Brennerbaugruppe eine mit Verbrennungsluft und Brennstoff zu speisende Brennkammer und ein Abgas von der Brennkammer weg führendes, in Richtung einer Längsachse langgestrecktes Flammrohr umfasst, wobei die Wärmetauscherbaugruppe ein inneres Wärmetauschergehäuse mit einer in Richtung der Längsachse langgestreckten inneren Umfangswandung und beispielsweise einer in einem axialen Endbereich der inneren Umfangswandung an diese anschließenden inneren Bodenwandung sowie ein äußeres Wärmetauschergehäuse mit einer in Richtung der Längsachse langgestreckten äußeren Umfangswandung und beispielsweise einer in einem axialen Endbereich der äußeren Umfangswandung an diese anschließenden äußeren Bodenwandung umfasst, wobei zwischen dem inneren Wärmetauschergehäuse und dem äußeren Wärmetauschergehäuse ein Wärmeträgermedium-Strömungsraum gebildet ist, wobei zwischen inneren Umfangswandung und dem Flammrohr ein zu einem Abgasauslass offener Abgasrückströmungsraum gebildet ist, wobei in dem Abgasrückströmungsraum eine von Abgas durchströmbare Katalysatoranordnung vorgesehen ist.

Derartige Fahrzeugheizgeräte werden in Fahrzeugen als Standheizungen oder Zuheizer eingesetzt und sind im Allgemeinen dazu ausgelegt, ein beispielsweise flüssiges Wärmeträgermedium wie das in einem Kühlmittelkreislauf einer Brennkraftmaschine vorgesehene flüssige Kühlmittel zu erwärmen.

Ein gattungsgemäßes Fahrzeugheizgerät gemäß dem Oberbegriff des Anspruchs 1 und ein Verfahren gemäß dem Oberbegriff des Anspruchs 6 zum Betreiben eines derartigen Fahrzeugheizgeräts sind aus der DE 10 2018 100 216 B3 bekannt. Bei diesem Fahrzeugheizgerät ist in Zuordnung zu einer in einem Abgasrückströmungsraum zwischen einem Flammrohr und einer inneren Umfangswandung eines inneren Wärmetauschergehäuses angeordneten Katalysatoranordnung eine elektrisch erregbare Heizeinheit vorgesehen. Diese Heizeinheit umfasst einen ringartig geformten Heizbereich der zwischen einer Stirnseite der ebenfalls ringartig ausgebildeten Katalysatoranordnung und axialen Endbereichen von am inneren Wärmetauschergehäuse vorgesehenen und im Abgasrückströmungsraum sich erstreckenden Wärmeübertragungsrippen positioniert ist. Durch Erregen der Heizeinrichtung in bzw. vor der Startphase des Verbrennungsbetriebs kann die Katalysatoranordnung vorgewärmt werden, so dass diese bereits bei Beginn der Verbrennung eine über einer Anspringtemperatur liegende Temperatur aufweist.

Aus der DE 1291 496 B ist ein Heizkessel für die Befeuerungen mit strömendem Brennstoff bekannt, bei welchem ein äußeres Wärmetauschergehäuse zusammen mit einem inneren Wärmetauschergehäuse einen Wärmeträgermedium-Strömungsraum begrenzt. An der von dem Wärmeträgermedium-Strömungsraum abgewandten Außenseite ist das äußere Wärmetauschergehäuse mit Isoliermaterial umgeben.

Es ist die Aufgabe der vorliegenden Erfindung, ein Fahrzeugheizgerät vorzusehen, welches bei kompaktem Aufbau effizient und mit geringem Schadstoffausstoß betrieben werden kann.

Erfindungsgemäß wird diese Aufgabe gelöst durch ein Fahrzeugheizgerät gemäß Anspruch 1. Dieses Fahrzeugheizgerät umfasst eine Brennerbaugruppe und eine Wärmetauscherbaugruppe, wobei die Brennerbaugruppe eine mit Verbrennungsluft und Brennstoff zu speisende Brennkammer und ein Abgas von der Brennkammer weg führendes, in Richtung einer Längsachse langgestrecktes Flammrohr umfasst, wobei die Wärmetauscherbaugruppe ein inneres Wärmetauschergehäuse mit einer in Richtung der Längsachse langgestreckten inneren Umfangswandung und beispielsweise einer in einem axialen Endbereich der inneren Umfangswandung an diese anschließenden inneren Bodenwandung sowie ein äußeres Wärmetauschergehäuse mit einer in Richtung der Längsachse langgestreckten äußeren Umfangswandung und beispielsweise einer in einem axialen Endbereich der äußeren Umfangswandung an diese anschließenden äußeren Bodenwandung umfasst, wobei zwischen dem inneren Wärmetauschergehäuse und dem äußeren Wärmetauschergehäuse ein Wärmeträgermedium-Strömungsraum gebildet ist, wobei zwischen inneren Umfangswandung und dem Flammrohr ein zu einem Abgasauslass offener Abgasrückströmungsraum gebildet ist, wobei in dem Abgasrückströmungsraum eine von Abgas durchströmbare Katalysatoranordnung vorgesehen ist.

Dieses Fahrzeugheizgerät zeichnet sich weiter dadurch aus, dass in Zuordnung zu der Katalysatoranordnung eine elektrisch erregbare Heizeinheit vorgesehen ist. Beispielsweise kann an dem äußeren Wärmetauschergehäuse an seiner von dem Wärmeträgermediumströmungsraum abgewandten Außenseite wenigstens bereichsweise überdeckendes Isoliermaterial vorgesehen sein.

Durch das Integrieren einer Katalysatoranordnung, beispielsweise eines 3-Wege-Katalysators, in den Abgasrückströmungsraum, kann, ohne dass zusätzlicher Bauraum für eine derartige Katalysatoranordnung zur Verfügung gestellt werden muss, der Schadstoffgehalt im Abgas gesenkt werden. Ist bei dem Fahrzeugheizgerät das äußere Wärmetauschergehäuse nach außen hin durch das Isoliermaterial thermisch isoliert, wird gewährleistet, dass insbesondere auch bei Verbrennungsbeginn und zunächst noch kaltem Fahrzeugheizgerät, insbesondere auch kalter Katalysatoranordnung, deren Temperatur schnell angehoben wird, so dass die katalytische Reaktion bereits kurz nach dem Verbrennungsbeginn einsetzen kann und die Zeitdauer, während welcher Abgas ohne Wirksamkeit der Katalysatoranordnung ausgestoßen werden, verkürzt wird. Das Vorsehen einer Heizeinheit in Zuordnung zu der Katalysatoranordnung bietet die Möglichkeit, die Katalysatoranordnung unabhängig vom Verbrennungsbetrieb vorzuwärmen oder warm zu halten, so dass eine Zeitdauer, während welcher im Verbrennungsbetrieb die Katalysatoranordnung aufgrund zu niedriger Temperatur nicht wirksam sein kann, vermieden oder zumindest verkürzt werden kann.

Es ist darauf hinzuweisen, dass im Sinne der vorliegenden Erfindung als Isoliermaterial jedwedes Material zu verstehen ist, welches die Abgabe von Wärme nach außen zur Umgebungsluft oder zu anderen Systemkomponenten eindämmt und beispielsweise eine geringere Wärmeleitfähigkeit aufweist, als die thermisch gegeneinander zu isolierenden Bereiche, also beispielsweise das äußere Wärmetauschergehäuse und die diese umgebende Luft. Beispielsweise kann um das äußere Wärmetauschergehäuse gewickeltes faserartiges bzw. mattenartiges Isoliermaterial oder geschäumtes Isoliermaterial eingesetzt werden.

Bei Ausgestaltung des erfindungsgemäßen Fahrzeugheizgeräts als Flüssigkeits- bzw. Wasserheizgerät kann zur Bereitstellung des von einem flüssigen Wärmeträgermedium durchströmbaren Wärmeträgermedium-Strömungsraums das innere Wärmetauschergehäuse eine in einem axialen Endbereich der inneren Umfangswandung an diese anschließende innere Bodenwandung aufweisen, das äußere Wärmetauschergehäuse eine in einem axialen Endbereich an diese anschließende äußere Bodenwandung aufweisen und der Wärmeträgermedium-Strömungsraum in einem von der inneren Bodenwandung und der äußeren Bodenwandung entfernten axialen Endbereich durch eine Stirnwandung begrenzt sein.

Um bei einer derartigen Ausgestaltung des Wärmetauscherbereichs für ein flüssiges Wärmeträgermedium eine noch bessere thermische Isolierung zu gewährleisten, kann die Stirnwandung an ihrer von dem Wärmeträgermediumströmungsraum abgewandten Außenseite wenigstens bereichsweise überdeckendes Isoliermaterial vorgesehen sein.

Eine besonders effiziente Ausnutzung der durch die Heizeinheit bereitgestellten Wärme wird dadurch erreicht, dass die Heizeinheit an der inneren Umfangswandung vorgesehen ist.

Dabei ist die Heizeinheit an einer dem Wärmeträgermedium-Strömungsraum zugewandten Außenseite der inneren Umfangswandung vorgesehen.

Alternativ oder zusätzlich ist für die thermische Wechselwirkung der Heizeinheit mit der Katalysatoranordnung die Heizeinheit an einer dem Abgasrückströmungsraum zugewandten Innenseite der inneren Umfangswandung einen Außenumfangsbereich der Katalysatoranordnung umgebend vorgesehen.

Für eine effiziente Erwärmung der Katalysatoranordnung ist es vorteilhaft, wenn die Heizeinheit wenigstens in einem die Katalysatoranordnung axial überlappenden Längenbereich der inneren Umfangswandung vorgesehen ist.

Gemäß einem weiteren Ausgestaltungsaspekt kann eine von Abgas umströmbare Lambdasonde vorgesehen sein. Vermittels einer derartigen Lambdasonde kann Information über die Qualität der Verbrennung bereitgestellt werden, um auf diese Art und Weise durch Beeinflussung des Verbrennungsluft/Brennstoff-Mengenverhältnisses die gewünschte Verbrennungscharakteristik einstellen zu können. Weiter kann eine derartige Lambdasonde auch als Flammfühler genutzt werden, da das Einsetzen bzw. Beenden der Verbrennung sich unmittelbar im Ausgangssignal der Lambdasonde wiederspiegelt.

Die Erfindung betrifft ferner Verfahren zum Betreiben eines gattungsgemäßen oder erfindungsgemäß aufgebauten Fahrzeugheizgerätes, wobei das Fahrzeugheizgerät in Zuordnung zu der Katalysatoranordnung eine elektrisch erregbare Heizeinheit aufweist. Bei diesem Verfahren wird die der Katalysatoranordnung zugeordnete elektrisch erregbare Heizeinheit in einer Startphase des Verbrennungsbetriebs oder/und in einer Endphase des Verbrennungsbetriebs oder/und nach einem Flammabriss betrieben.

Somit kann durch die im Betrieb der Heizeinheit bereitgestellte Wärme die Katalysatoranordnung vor dem Einsetzen der Verbrennung der derart erwärmt werden, dass unmittelbar bei Auftreten der Verbrennung das dabei entstehende Abgas in der Katalysatoranordnung einer katalytischen Reaktion unterzogen werden kann. In einer Abschaltphase eines Fahrzeugheizgeräts oder bei Auftreten eines Flammabrisses kann durch Betreiben der Heizeinheit die Katalysatoranordnung auf einer Temperatur gehalten werden, welche gewährleistet, dass ein Austritt von nicht katalytisch behandeltem Abgas vermieden wird.

Bei dem erfindungsgemäßen Verfahren kann in der Startphase des Verbrennungsbetriebs oder/und bei einem Neustart nach einem Flammabriss die Heizleistung der in Zuordnung zur Katalysatoranordnung vorgesehenen elektrisch erregbaren Heizeinheit nach Verbrennungsbeginn abgesenkt werden. Mit einsetzender Verbrennung kann die Katalysatoranordnung allein aufgrund der im Abgas transportierten Wärme erwärmt bzw. warm gehalten werden, so dass ein zusätzlicher Eintrag von Wärme vermittels der Heizeinheit nicht mehr erforderlich ist.

In der Endphase des Verbrennungsbetriebs oder/und bei einem Flammabriss wird erfindungsgemäß die Heizleistung der in Zuordnung zur Katalysatoranordnung vorgesehenen elektrisch erregbaren Heizeinheit nach Verbrennungsende angehoben.

Die vorliegende Erfindung wird nachfolgend mit Bezug auf die beiliegenden Figuren detailliert beschrieben. Es zeigt:
- Fig. 1: eine Längsschnittdarstellung eines brennstoffbetriebenen Fahrzeugheizgeräts;
- Fig. 2: in ihren Darstellungen a), b) und c) die im Verbrennungsbetrieb bzw. durch eine elektrisch erregbare Heizeinheit generierte Wärme in verschiedenen Betriebsphasen eines brennstoffbetriebenen Fahrzeugheizgeräts.

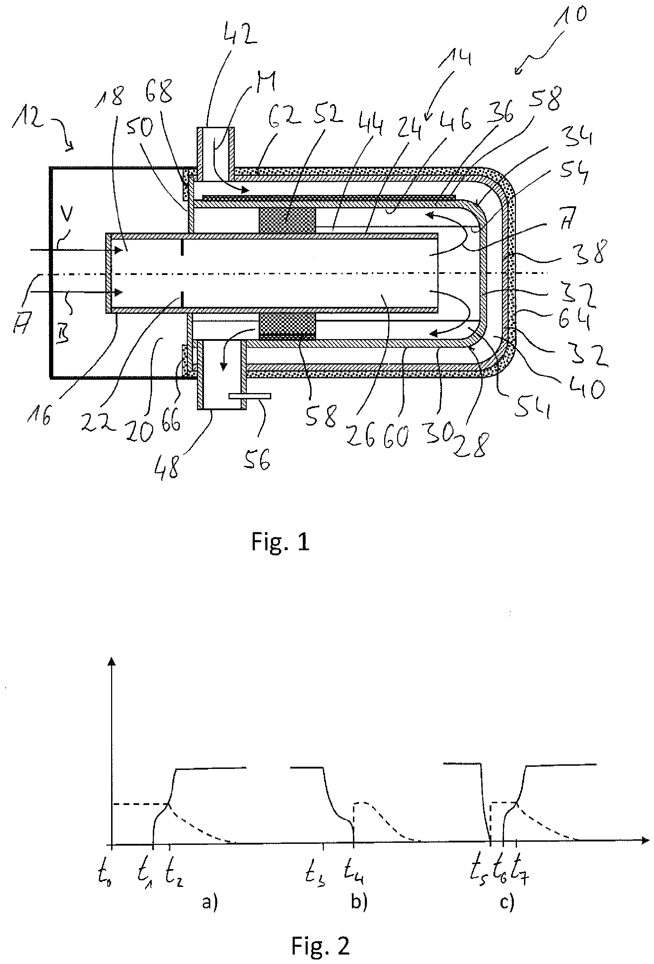

Ein in Fig. 1 dargestelltes brennstoffbetriebenes Fahrzeugheizgerät 10 umfasst eine allgemein mit 12 bezeichnete Brennerbaugruppe sowie eine allgemein mit 14 bezeichnete Wärmetauscherbaugruppe. Die weitestgehend in prinzipartiger Darstellung gezeigte Brennerbaugruppe 12 umfasst eine in einem Brennkammergehäuse 16 ausgebildete Brennkammer 18. dieser werden vermittels einer nicht dargestellten Verbrennungsluftzuführeinheit, beispielsweise Seitenkanalgebläse, Verbrennungsluft V und vermittels einer ebenfalls nicht dargestellten Brennstoffzuführeinheit, beispielsweise Dosierpumpe, Brennstoff B zugeführt. Bei Ausgestaltung der Brennerbaugruppe 12 als Verdampferbrenner kann der Brennstoff B in ein in der Brennkammer 18 vorgesehenes poröses Verdampfermedium eingespeist und über dieses poröse Verdampfermedium in gas- bzw. dampfartiger Form in die Brennkammer 18 abgegeben werden. Die Verbrennungsluft V kann über ein das Brennkammergehäuse 16 umgebendes Volumen 20 und im Brennkammergehäuse 16 ausgebildete Durchtrittsöffnungen in die Brennkammer 18 eingeleitet werden.

Das in der Brennkammer 18 gebildete Gemisch aus Verbrennungsluft V und Brennstoff B kann durch ein nicht dargestelltes Zündorgan, beispielsweise Glühstift, gezündet werden, so dass bei in der Brennkammer 18 dann ablaufender Verbrennung Abgas A durch eine Flammblende 22 hindurch in einen in einem Flammrohr 24 gebildeten Abgasströmungsraum 26 eintreten kann. Auch im Abgasströmungsraum 26 kann ein Teil des Gemisches aus Verbrennungsluft V und Brennstoff B verbrannt werden.

Das Flammrohr 24 erstreckt sich in die grundsätzlich mit topfartiger Struktur bereitgestellte Wärmetauscherbaugruppe 14 hinein. Die Wärmetauscherbaugruppe 14 umfasst ein inneres Wärmetauschergehäuse 28 mit einer inneren Umfangswandung 30, welche, ebenso wie das Flammrohr 24, in Richtung einer Längsachse L langgestreckt ist. In einem axialen Endbereich schließt an die innere Umfangswandung 30 eine innere Bodenwandung 32 des inneren Wärmetauschergehäuses 28 an. Vorteilhafterweise sind die innere Umfangswandung 30 und die innere Bodenwandung 32 miteinander integral ausgebildet. Beispielsweise kann das innere Wärmetauschergehäuse 28 als Metall-Gussteil bereitgestellt sein.

Die Wärmetauscherbaugruppe 14 umfasst ferner ein äußeres Wärmetauschergehäuse 34. Auch das äußere Wärmetauschergehäuse 34 ist mit grundsätzlich topfartiger Struktur bereitgestellt und umfasst eine äußere Umfangswandung 36 und in einem axialen Endbereich an diese anschließend eine äußere Bodenwandung 38. Auch das äußere Wärmetauschergehäuse 34 ist mit seiner äußeren Umfangswandung 36 und seiner äußeren Bodenwandung 38 vorteilhafterweise als integrales Bauteil bereitgestellt und kann gleichermaßen als Metall-Gussbauteil bereitgestellt sein. Da im Bereich des äußeren Wärmetauschergehäuses 34 die thermische Belastung geringer ist, als im Bereich des inneren Wärmetauschergehäuses 28, kann das äußere Wärmetauschergehäuse 34 grundsätzlich auch als Kunststoffbauteil bereitgestellt sein.

Zwischen dem inneren Wärmetauschergehäuse 28 und dem äußeren Wärmetauschergehäuse 34 ist ein Wärmeträgermedium-Strömungsraum 40 gebildet. Ein zu erwärmendes Wärmeträgermedium M kann über einen Einlassstutzen 42 in den Wärmeträgermedium-Strömungsraum 40 eintreten, diesen durchströmen und den Wärmeträgermedium-Strömungsraum 40 über einen in der Fig. 1 nicht erkennbaren Auslassstutzen verlassen.

Zwischen der inneren Umfangswandung 30 und dem Flammrohr 24 ist ein Abgasrückströmungsraum 44 gebildet. Das aus dem Flammrohr 24 an seinem der inneren Bodenwandung 32 gegenüberliegenden Ende austretende Abgas A wird an der inneren Bodenwandung 32 nach radial außen umgelenkt und strömt in einer der Strömung im Abgasströmungsraum 26 im Wesentlichen entgegengesetzten Strömungsrichtung entlang einer Innenseite 46 der inneren Umfangswandung 30 in Richtung zu einem Auslassstutzen 48. Über den Auslassstutzen 48 kann das Abgas A nach Durchströmen des Abgasrückströmungsraums 44 und Abgabe von Wärme auf das innere Wärmetauschergehäuse 28 und über dieses auf das den Wärmeträgermedium-Strömungsraum 40 durchströmende Wärmeträgermedium M die Wärmetauscherbaugruppe 14 verlassen.

Der Wärmeträgermedium-Strömungsraum 40 und der Abgasrückströmungsraum 44 können durch eine gemeinsame Stirnwandung 50 an ihrem von der inneren Bodenwandung 32 bzw. der äußeren Bodenwandung 38 entfernten axialen Endbereichen abgeschlossen sein. Es ist darauf hinzuweisen, dass für den Wärmeträgermedium-Strömungsraum 40 und den Abgasrückströmungsraum 44 selbstverständlich auch voneinander getrennt ausgebildete Stirnwandungen vorgesehen sein können, um diese abzuschließen. An der Stirnwandung 50 bzw. einer dieser Stirnwandungen kann beispielsweise auch das Brennkammergehäuse 16 bzw. das Flammrohr 24 getragen sein. Ferner kann die den Wärmeträgermedium-Strömungsraum 40 axial begrenzende Stirnwand auch als integraler Bestandteil von einem der beiden Wärmetauschergehäuse 28, 34, insbesondere des inneren Wärmetauschergehäuses 28, bereitgestellt sein.

Im Abgasrückströmungsraum 44 ist eine allgemein mit 52 bezeichnete Katalysatoranordnung vorgesehen. Diese umfasst einen mit Öffnungen oder porös ausgebildeten, beispielsweise monolithischen Träger, dessen Oberfläche mit katalytisch wirksamem Material bereitgestellt ist. Das den Abgasrückströmungsraum 44 durchströmende Abgas A strömt somit zwangsweise durch die Katalysatoranordnung 52 hindurch und wird dabei einer katalytischen Reaktion unterzogen, um den Schadstoffanteil im Abgas A zu senken. Beispielsweise kann die Katalysatoranordnung 52 als 3-Wege-Katalysator ausgebildet sein.

Um den Wärmeübertrag auf das innere Wärmetauschergehäuse 28 zu verbessern, kann dieses insbesondere an der Innenseite 46 der inneren Umfangswandung 30 eine Mehrzahl von Wärmeübertragungsrippen 54 aufweisen. Dabei zeigt die Fig. 1 in ihrer oberen Hälfte einerseits und in ihrer unteren Hälfte andererseits verschiedene Konfigurationen der Wärmeübertragungsrippen 54. Während in der oberen Hälfte der Fig. 1 die Wärmeübertragungsrippen 54 sich nur über einen Teilbereich der axialen Erstreckung der inneren Umfangswandung 30 ausdehnen und die Katalysatoranordnung 52 axial angrenzend an die Wärmeübertragungsrippen 54 positioniert ist, sind bei der in der unteren Hälfte der Fig. 1 dargestellten Variante die Wärmeübertragungsrippen 54 beispielsweise über die gesamte axiale Länge der inneren Umfangswandung 30 ausgedehnt, und die Katalysatoranordnung 52 weist in Zuordnung zu den Wärmeübertragungsrippen 54 Aussparungen auf, so dass die Katalysatoranordnung 52 in Zwischenräume zwischen in Umfangsrichtung aufeinander folgenden Wärmeübertragungsrippen 54 eingreifen kann und nicht die Möglichkeit besteht, dass Abgas A, ohne durch die Katalysatoranordnung 52 hindurch zu strömen, zum Auslassstutzen 48 gelangt.

Am Auslassstutzen 48 ist eine Lambdasonde 56 getragen. Das von dieser generierte Signal kann in eine nicht dargestellte Ansteuereinheit eingeleitet werden, so dass durch Auswertung dieses Ausgangssignals der Lambdasonde erkannt werden kann, mit welcher Qualität die Verbrennung in der Brennkammer 18 bzw. im Abgasströmungsraum 26 abläuft, also beispielsweise ob ein überstöchiometrisches Gemisch von Verbrennungsluft V und Brennstoff B verbrannt wird, ein unterstöchiometrisches Gemisch von Verbrennungsluft V und Brennstoff B verbrannt wird oder ob das verbrannte Gemisch stöchiometrisch ist, so dass die Verbrennung bei einem Lambdawert von etwa 1 abläuft. Durch die vermittels der Lambdasonde 56 bereitgestellte Information wird es möglich, durch entsprechende Einstellung der der Brennkammer 18 zugeführten Menge der Verbrennungsluft V bzw. des Brennstoffs B ein für die gewünschte Verbrennungscharakteristik vorzusehendes Gemisch zu erzeugen.

Da das Ausgangssignal der Lambdasonde abhängt von der Zusammensetzung des diese umströmenden Abgases A bzw. allgemein des diese umströmenden Gases, kann dieses Signal auch genutzt werden, um Information darüber bereitzustellen, ob in der Brennkammer 18 überhaupt eine Verbrennung abläuft. Dies bedeutet, dass die Lambdasonde 56 gleichzeitig auch als Flammfühler genutzt werden kann, um somit Information darüber bereitzustellen, dass in der Brennkammer 18 eine Verbrennung abläuft oder dass die Verbrennung in der Brennkammer 18 beendet ist.

In Zuordnung zur Katalysatoranordnung 52 ist ferner eine allgemein mit 58 bezeichnete elektrisch erregbare Heizeinheit vorgesehen. Auch hier zeigt die Fig. 1 in ihrer oberen Hälfte einerseits und ihrer unteren Hälfte andererseits zwei verschiedene Ausgestaltungsvarianten. In beiden Ausgestaltungsvarianten ist die elektrisch erregbare Heizeinheit 58 an der Innenumfangswandung 30 des inneren Wärmetauschergehäuses 28 vorgesehen. Bei der in Fig. 1 oben dargestellten Variante ist die elektrisch erregbare Heizeinheit 58 an der dem Wärmeträgermedium-Strömungsraum 40 zugewandten Außenseite 60 der inneren Umfangswandung 30 angeordnet und liegt somit im Wesentlichen im Wärmeträgermedium-Strömungsraum 40 bzw. ist von dem im Wärmeträgermedium-Strömungsraum 40 strömenden Wärmeträgermedium M umströmbar.

Die Heizeinheit 58 erstreckt sich näherungsweise über die gesamte axiale Erstreckungslänge der inneren Umfangswandung 30 und kann diese vorteilhafterweise über deren gesamten Außenumfang umgebend angeordnet sein. Dabei überdeckt die Heizeinheit 58 insbesondere auch den axialen Längenbereich der inneren Umfangswandung 30, in welchem die Katalysatoranordnung 52 positioniert ist und mit ihrem Außenumfangsbereich an der Innenseite 46 der inneren Umfangswandung 30 anliegend positioniert ist.

Mit der so ausgestalteten Heizeinheit 58 wird es möglich, Wärme auf das den Wärmeträgermedium-Strömungsraum 40 durchströmende Wärmeträgermedium M zu übertragen, so dass ergänzend oder alternativ zum Verbrennungsbetrieb zumindest phasenweise das Wärmeträgermedium M auch durch elektrische Heizung erwärmt werden kann. Ferner kann die Heizeinheit 58 dazu genutzt werden, die Katalysatoranordnung 52 zu erwärmen, so dass, wie nachfolgend mit Bezug auf die Fig. 2 erläutert, auch in Betriebsphasen, in welchen die Katalysatoranordnung 52 durch Abgas A nicht oder nicht ausreichend erwärmt werden kann, um das Einsetzen bzw. das Durchführen der katalytischen Reaktion zu ermöglichen, durch Betreiben der Heizeinheit 58 die Katalysatoranordnung 52 ausreichend erwärmt werden kann.

In der in Fig. 1 unten dargestellten Ausgestaltungsvariante ist die elektrisch erregbare Heizeinheit 58 an der Innenseite 46 der Innenumfangswandung 30 vorgesehen und umgibt den Außenumfangsbereich der Katalysatoranordnung 52 beispielsweise auch in den Bereichen, in welchen diese Aussparungen zur Aufnahme der Wärmeübertragungsrippen 54 aufweist. Bei dieser Variante wird ein verstärkter thermischer Kontakt zwischen der Heizeinheit 58 und der Katalysatoranordnung 52 und somit eine noch effizientere Erwärmung derselben gewährleistet, während Wärme auf das im Wärmeträgermedium-Strömungsraum 40 strömende Wärmeträgermedium M über den thermischen Kontakt zwischen der Heizeinheit 58 und der inneren Umfangswandung 30 übertragen werden kann. Auch bei der in Fig. 1 unten dargestellten Ausgestaltungsvariante erstreckt die Heizeinheit 58 sich über denjenigen axialen Längenbereich des inneren Wärmetauschergehäuses 28, in welchem die Katalysatoranordnung 52 vorgesehen ist, so dass auch hier eine effiziente und über den gesamten axialen Ausdehnungsbereich der Katalysatoranordnung 52 erfolgende Erwärmung vorgesehen sein kann. Selbstverständlich könnte auch bei dieser Ausgestaltung eine größere axiale Ausdehnung der Heizeinheit 58 vorgesehen sein, während bei der in Fig. 1 oben dargestellten Variante die axiale Ausdehnung der Heizeinheit 58 auf den Längenbereich beschränkt sein könnte, in welchem im Abgasrückströmungsraum 44 die Katalysatoranordnung 52 vorgesehen ist. Auch könnte sowohl an der Innenseite 46, als auch der Außenseite 60 der inneren Umfangswandung 30 jeweils eine Heizeinheit 58 vorgesehen sein.

Um bei dem Fahrzeugheizgerät 10 Wärmeverluste nach außen möglichst vermeiden zu können, ist das äußere Wärmetauschergehäuse 34 an einer vom Wärmeträgermedium-Strömungsraum 40 abgewandten Außenseite 62 vorzugsweise im Wesentlichen vollständig mit thermisch isolierendem Isoliermaterial 64 überzogen. Dieses in einer oder mehreren Lagen aufgebrachte Isoliermaterial, welches beispielsweise geschäumtes Material oder faserartiges bzw. mattenartiges Material sein kann, verhindert übermäßige Wärmeverluste nach außen. Derartiges thermisch isolierendes Isoliermaterial 66 kann beispielsweise auch an einer vom Wärmeträgermedium-Strömungsraum 40 abgewandten Außenseite 68 der Stirnwandung 50 zumindest dort vorgesehen sein, wo diese dem Wärmeträgermedium-Strömungsraum an seiner von den Bodenwandungen 32, 38 abgewandten axialen Ende abschließt. Grundsätzlich könnte das Isoliermaterial 66 sich auch noch weiter nach radial innen erstrecken und auch den Teil der Stirnwandung 50 an deren Außenseite 68 überdecken, in welchem diese den Abgasrückströmungsraum 44 abschließt. Somit können durch das Isoliermaterial 68 Wärmeverluste in Richtung zur Brennerbaugruppe 12 bzw. in Richtung zu an die Stirnwandung 50 anschließenden Komponenten oder Systembereichen der Brennerbaugruppe 12 vermieden werden.

Mit dem in Fig. 1 dargestellten Aufbau eines brennstoffbetriebenen Fahrzeugheizgeräts wird ein effizienter, schadstoffarmer Betrieb ermöglicht. Durch den Einsatz der Katalysatoranordnung kann der Gehalt von CO, HC, NO₂ bzw. NO im Abgas A deutlich gemindert werden, insbesondere wenn unter Verwendung der vermittels der Lambdasonde 56 bereitgestellten Information das Fahrzeugheizgerät 10 mit einem Verbrennungsbetrieb im Bereich von Lambda 1 betrieben wird. Auch bei Einsatz von Ethanol enthaltendem Brennstoff besteht die Möglichkeit, das Fahrzeugheizgerät 10 mit geringem Schadstoffausstoß zu betreiben. Da die Lambdasonde 56 gleichzeitig auch als Flammfühler genutzt werden kann, kann auf das Vorsehen eines zusätzlichen Flammfühlers verzichtet werden, und die Integration der Katalysatoranordnung 52 in den Abgasrückströmungsraum 44 vermeidet die Notwendigkeit, zusätzliche Baugruppen vorsehen zu müssen, welche die Aufnahme einer derartigen Katalysatoranordnung beispielsweise stromabwärts des Auslassstutzens 48 ermöglichen.

Durch die vermittels der Isoliermaterials 64 bzw. 68 realisierte thermische Isolierung und die Möglichkeit, die Katalysatoranordnung 52 vermittels der Heizeinheit 58 zu erwärmen, kann weiter dafür gesorgt werden, dass eine Zeitdauer des Verbrennungsbetriebs, in welchem einer katalytischen Reaktion nicht unterzogenes Abgas A ausgestoßen wird, nicht vorhanden ist oder zumindest deutlich verkürzt ist. Dies wird nachfolgend mit Bezug auf die Fig. 2 erläutert.

Die Fig. 2 zeigt, aufgetragen über der Zeit, die in verschiedenen Betriebszuständen durch Verbrennung eingetragene Wärmemenge bzw. durch Verbrennung bereitgestellte Heizleistung (durchgezogene Linie) und die durch die elektrisch erregbare Heizeinheit 58 eingetragene Wärmemenge bzw. bereitgestellte Heizleistung (gestrichelte Linie). Dabei zeigt die Fig. a) die Startphase des Verbrennungsbetriebs. Wird beispielsweise zu einem Zeitpunkt t₀ ein Befehl zum Starten des Fahrzeugheizgeräts 10 ausgegeben, so kann, begleitend zu anderen Maßnahmen, wie z. B. das Vorheizen des Zündorgans, die Heizeinheit 58 aktiviert, also eingeschaltet werden. Durch den Heizbetrieb der Heizeinheit 58 wird die Katalysatoranordnung 52 vorgewärmt und bereits vor Einsetzen der Verbrennung auf eine Temperatur gebracht, welche zumindest nahe, vorteilhafterweise über der Starttemperatur für die katalytische Reaktion liegt. Zu einem Zeitpunkt t₁ beginnt nach einsetzender Brennstoffzufuhr das in der Brennkammer 18 gebildete Gemisch zu brennen und der Wärmeeintrag durch das verbrennende Gemisch aus Brennstoff B und Verbrennungsluft V steigt an. Das Einsetzen der Verbrennung zum Zeitpunkt t₁ kann anhand des Ausgangssignals der Lambdasonde 56 erkannt werden. Beispielsweise eine vorbestimmte Zeitdauer nach dem Einsetzend der Verbrennung oder dann, wenn zu einem Zeitpunkt t₂ die Verbrennung eine bestimmte Qualität erreicht hat, kann die Heizleistung der Heizeinheit 58 vorteilhafterweise allmählich abgesenkt werden, da dann gewährleistet ist, dass allein durch die im Abgas A transportierte Wärme die Katalysatoranordnung 52 bei einer Temperatur gehalten werden kann, welche die Durchführung der katalytischen Reaktion ermöglicht. In dieser Startphase der Verbrennung, also zwischen den Zeitpunkten t₁ und t₂, kann das Fahrzeugheizgerät 10 beispielsweise derart mit Brennstoff B und Verbrennungsluft V gespeist werden, dass die Verbrennung mit einem Lambdawert im Bereich von 1,5-2,0 abläuft. Danach, also im normalen Verbrennungs- bzw. Heizbetrieb, kann das Fahrzeugheizgerät 10 mit einem Lambdawert im Bereich von etwa 1,0 betrieben werden.

Die Fig. 2b) zeigt einen Zustand, bei welchem die Verbrennung in der Brennkammer 18 kontrolliert beendet werden soll. Wird beispielsweise zum Zeitpunkt t₃ ein Befehl zum Beenden der Verbrennung ausgegeben und begleitet damit die Brennstoffzufuhr zur Brennkammer 18 gedrosselt bzw. beendet, nimmt der Eintrag von Wärme aufgrund der in der Brennkammer 18 ablaufenden Verbrennung allmählich ab. Zu einem Zeitpunkt t₄ kann mit dem vollständigen Erlöschen der Flamme die Verbrennung beendet sein. Zu diesem Zeitpunkt t₄ kann dann die durch die Heizeinheit 18 bereitgestellte Heizleistung bzw. in das System eingetragene Wärmemenge angehoben werden, beispielsweise spontan angehoben werden, so dass nachfolgend bei zunächst noch aufgrund der zuvor ablaufenden Verbrennung ausreichend warmer Katalysatoranordnung 52 dem Abkühlen unter die Temperatur, welche die Durchführung der katalytischen Reaktion ermöglicht, verhindert wird. Darauf folgend kann allmählich auch die Heizleistung der Heizeinheit 58 gesenkt werden, so dass gewährleistet ist, dass beispielsweise durch eine fortgesetzte Förderung von Verbrennungsluft V noch ausgetragene Abgasanteile die Katalysatoranordnung 52 bei noch ausreichend hoher Temperatur durchströmen können.

Die Fig. 2c) zeigt das Auftreten eines Flammabrisses, beispielsweise aufgrund einer durch Blasenbildung oder sonstige Umstände vorübergehend unterbrochenen Brennstoffzufuhr. Kommt bei einem Flammabriss zum Zeitpunkt t₅ die Verbrennung zum Erliegen, wird die Heizeinheit 58 erregt bzw. der durch diese bereitgestellte Wärmeeintrag angehoben, so dass gewährleistet ist, dass bis zu Neustart der Verbrennung zum Zeitpunkt t₆ und insbesondere so lange, bis die im Abgas A dann transportierte Wärme eine ausreichende Erwärmung der Katalysatoranordnung 52 gewährleistet, durch die Heizeinheit 58 die Katalysatoranordnung 52 auf einer für die Durchführung der katalytischen Reaktion erforderlichen Temperatur hält. Zum Zeitpunkt t₇ kann dann, beispielsweise wiederum eine vorbestimmte Zeitdauer nach dem Zeitpunkt t₆ bzw. wenn die durch die Verbrennung bereitgestellte Wärmemenge ausreichend groß ist, begonnen werden, den Wärmeeintrag durch die Heizeinheit 58 wieder abzusenken.

Es ist selbstverständlich, dass die vorangehend mit Bezug auf die Fig. 2 beschriebene Aktivierung der Heizeinheit 58 in verschiedenen Betriebsphasen auch anders ablaufen kann. So kann beispielsweise im Falle eines kontrollierten Beendens des Verbrennungsbetriebs oder bei Auftreten eines Flammabrisses das Anheben der durch die Heizeinheit 58 bereitgestellten Heizleistung bereits vor dem Beenden der Verbrennung, beispielsweise dann, wenn eine signifikante Veränderung im Verbrennungszustand anhand des Ausgangssignals der Lambdasonde 56 erkannt wird, gestartet werden.

Während das vorangehend beschriebene Heizgerät besonders vorteilhaft als Fahrzeugheizgerät angewandt werden kann, ist es selbstverständlich, dass dieses auch in anderen zu heizenden Umgebungen, wie zum Beispiel Gebäuden, Schiffen oder dergleichen, Anwendung finden kann. Der Einsatzzweck als Fahrzeugheizgerät ist daher im Sinne der vorliegenden Erfindung lediglich als Vorschlag für eine besonders vorteilhafte Anwendung zu verstehen.

## Patentansprüche

1. Fahrzeugheizgerät, umfassend eine Brennerbaugruppe (12) und eine Wärmetauscherbaugruppe (14), wobei:
- die Brennerbaugruppe (12) eine mit Verbrennungsluft (V) und Brennstoff (B) zu speisende Brennkammer (18) und ein Abgas (A) von der Brennkammer (18) weg führendes, in Richtung einer Längsachse (L) langgestrecktes Flammrohr (24) umfasst,
- die Wärmetauscherbaugruppe (14) ein inneres Wärmetauschergehäuse (28) mit einer in Richtung der Längsachse (L) langgestreckten inneren Umfangswandung (30) sowie ein äußeres Wärmetauschergehäuse (34) mit einer in Richtung der Längsachse (L) langgestreckten äußeren Umfangswandung (36) umfasst,
- zwischen dem inneren Wärmetauschergehäuse (28) und dem äußeren Wärmetauschergehäuse (34) ein Wärmeträgermedium-Strömungsraum (40) gebildet ist,
- zwischen inneren Umfangswandung (30) und dem Flammrohr (24) ein zu einem Abgasauslass offener Abgasrückströmungsraum (44) gebildet ist, wobei in dem Abgasrückströmungsraum (44) eine von Abgas (A) durchströmbare Katalysatoranordnung (52) vorgesehen ist,
- in Zuordnung zu der Katalysatoranordnung (52) eine elektrisch erregbare Heizeinheit (58),
**dadurch gekennzeichnet,**
**dass** die Heizeinheit (58) an einer dem Wärmeträgermedium-Strömungsraum (40) zugewandten Außenseite (60) der inneren Umfangswandung (30) vorgesehen ist,
oder/ und
**dass** die Heizeinheit (58) an einer dem Abgasrückströmungsraum (44) zugewandten Innenseite (46) der inneren Umfangswandung (30) einen Außenumfangsbereich der Katalysatoranordnung (52) umgebend vorgesehen ist.

2. Fahrzeugheizgerät nach Anspruch 1, **dadurch gekennzeichnet, dass** das innere Wärmetauschergehäuse (28) eine in einem axialen Endbereich der inneren Umfangswandung (30) an diese anschließende innere Bodenwandung (32) aufweist, dass das äußere Wärmetauschergehäuse (34) eine in einem axialen Endbereich an diese anschließende äußere Bodenwandung (38) aufweist, dass der Wärmeträgermedium-Strömungsraum (40) in einem von der inneren Bodenwandung (32) und der äußeren Bodenwandung (38) entfernten axialen Endbereich durch eine Stirnwandung (50) begrenzt ist, und dass die Stirnwandung (50) an ihrer von dem Wärmeträgermediumströmungsraum (40) abgewandten Außenseite (68) wenigstens bereichsweise überdeckendes Isoliermaterial (66) vorgesehen ist.

3. Fahrzeugheizgerät nach Anspruch 1 oder 2, **dadurch gekennzeichnet, dass** an dem äußeren Wärmetauschergehäuse (34) an seiner von dem Wärmeträermediumströmunsraum (40) abgewandten Außenseite (62) das äußere Wärmetauschergehäuse (34) wenigstens bereichsweise überdeckendes Isoliermaterial (64) vorgesehen ist.

4. Fahrzeugheizgerät nach einem der Ansprüche 1-3, **dadurch gekennzeichnet, dass** die Heizeinheit (58) wenigstens in einem die Katalysatoranordnung (52) axial überlappenden Längenbereich der inneren Umfangswandung (30) vorgesehen ist.

5. Fahrzeugheizgerät nach einem der vorangehenden Ansprüche, **dadurch gekennzeichnet, dass** eine von Abgas (A) umströmbare Lambdasonde (56) vorgesehen ist.

6. Verfahren zum Betreiben eines Fahrzeugheizgerätes (10) nach dem Oberbegriff des Anspruchs 1 oder einem der vorangehenden Ansprüche, bei welchem Verfahren die der Katalysatoranordnung (52) zugeordnete elektrisch erregbare Heizeinheit (58) in einer Startphase des Verbrennungsbetriebs oder/und in einer Endphase des Verbrennungsbetriebs oder/und nach einem Flammabriss betrieben wird, **dadurch gekennzeichnet, dass** in der Endphase des Verbrennungsbetriebs oder/und bei einem Flammabriss die Heizleistung der in Zuordnung zur Katalysatoranordnung (52) vorgesehenen elektrisch erregbaren Heizeinheit (52) nach Verbrennungsende angehoben wird.

7. Verfahren nach Anspruch 6, **dadurch gekennzeichnet, dass** in der Startphase des Verbrennungsbetriebs oder/und bei einem Neustart nach einem Flammabriss die Heizleistung der in Zuordnung zur Katalysatoranordnung (52) vorgesehenen elektrisch erregbaren Heizeinheit (58) nach Verbrennungsbeginn abgesenkt wird.

## Claims

1. Vehicle heater, comprising a burner assembly unit (12) and a heat exchanger assembly unit (14), wherein:
- the burner assembly unit (12) comprises a combustion chamber (18), which is to be fed with combustion air (V) and fuel (B) and a flame tube (24) elongated in the direction of a longitudinal axis (L) which carries exhaust gas (A) away from the combustion chamber (18),
- the heat exchanger assembly unit (14) comprises an inner heat exchanger housing (28) with an inner circumferential wall (30) elongated in the direction of the longitudinal axis (L), as well as an outer heat exchanger housing (34) with an outer circumferential wall (36) elongated in the direction of the longitudinal axis (L),
- a heat transfer medium flow space (40) is formed between the inner heat exchanger housing (28) and the outer heat exchanger housing (34),
- a waste gas backflow space (44), which is open towards an exhaust gas outlet, is formed between the inner circumferential wall (30) and the flame tube (24), wherein a catalytic converter device (52), through which exhaust gas (A) can flow, is provided in the waste gas backflow space (44),
- an electrically energizable heating unit (58) is provided in association with the catalytic converter device (52),
**characterized in that**
the heating unit (58) is provided on an outer side (60) of the inner circumferential wall (30), which is facing the heat transfer medium flow space (40),
or/and
**in that** the heating unit (58) is provided on an inner side (46) of the inner circumferential wall (30), which inner side is facing the waste gas backflow space (44), surrounding an outer circumferential area of the catalytic converter device (52).

2. Vehicle heater in accordance with claim 1, **characterized in that** the inner heat exchanger housing (28) has in an axial end area of the inner circumferential wall (30) an inner base wall (32) adjoining this circumferential wall, that the outer heat exchanger housing (34) has in an axial end area an outer base wall (38) adjoining this end area, that the heat transfer medium flow space (40) is defined by a front wall (50) in an axial end area located at a distance from the inner base wall (32) and from the outer base wall (38), and that the front wall (50) is provided with insulation material (66) in at least some areas on its outer side (68) facing away from the heat transfer medium flow space (40).

3. Vehicle heater in accordance with claim 1 or 2, **characterized in that** the outer heat exchanger housing (34) is provided with insulation material (64) overlapping the outer heat exchanger housing (34) in at least some areas on its outer side (62) facing away from the heat transfer medium flow space (40).

4. Vehicle heater in accordance with one of the claims 1-3, **characterized in that** the heating unit (58) is provided at least in one length area of the inner circumferential wall (30), which length area axially overlaps the catalytic converter device (52).

5. Vehicle heater in accordance with one of the above claims, **characterized in that** a lambda probe (56), around which exhaust gas (A) can flow, is provided.

6. Process for operating a vehicle heater (10) in accordance with the preamble of claim 1 or one of the above claims, in which process the electrically energizable heating unit (58) associated with the catalytic converter device (52) is operated in a start phase of the combustion operation or/and in an end phase of the combustion operation or/and after a flame-out,
**characterized in that**
in the end phase of the combustion operation or/and in case of a flame-out, the heat output of the electrically energizable heating unit (52) provided in association with the catalytic converter device (52) is raised after the end of combustion.

7. Process in accordance with claim 6, **characterized in that** in the start phase of the combustion operation or/and in case of a restart after a flame-out the heat output of the electrically energizable heating unit (58), provided in association with the catalytic converter device (52), is lowered after the start of combustion.

## Revendications

1. Dispositif de chauffage de véhicule, comprenant un module de brûleur (12) et un module d'échangeur de chaleur (14), dans lequel :
- le module de brûleur (12) comprend une chambre de combustion (18), qui doit être alimentée en air de combustion (V) et en carburant (B), et un tube de flamme (24) allongé dans la direction d'un axe longitudinal (L) qui transporte les gaz d'échappement (A) à l'écart de la chambre de combustion (18),
- le module d'échangeur de chaleur (14) comprend un boîtier d'échangeur de chaleur intérieur (28) avec une paroi circonférentielle intérieure (30) allongée dans la direction de l'axe longitudinal (L), ainsi qu'un boîtier d'échangeur de chaleur extérieur (34) avec une paroi circonférentielle extérieure (36) allongée dans la direction de l'axe longitudinal (L),
- un espace de circulation de fluide caloporteur (40) est formé entre le boîtier d'échangeur de chaleur intérieur (28) et le boîtier d'échangeur de chaleur extérieur (34),
- un espace de reflux des gaz d'échappement (44), ouvert vers une sortie de gaz d'échappement, est formé entre la paroi circonférentielle intérieure (30) et le tube de flamme (24), dans lequel un dispositif de convertisseur catalytique (52), à travers lequel les gaz d'échappement (A) peuvent circuler, est prévu dans l'espace de reflux des gaz d'échappement (44),
- une unité de chauffage (58) pouvant être alimentée électriquement est prévue en association avec le dispositif de convertisseur catalytique (52),
**caractérisé en ce que**
l'unité de chauffage (58) est prévue sur un côté extérieur (60) de la paroi circonférentielle intérieure (30), qui fait face à l'espace d'écoulement de fluide caloporteur (40),
ou/et
**en ce que** l'unité de chauffage (58) est prévue sur un côté intérieur (46) de la paroi circonférentielle intérieure (30), ce côté intérieur étant orienté vers l'espace de retour des gaz d'échappement (44), entourant une zone circonférentielle extérieure du dispositif de convertisseur catalytique (52).

2. Dispositif de chauffage de véhicule selon la revendication 1, **caractérisé en ce que** le boîtier d'échangeur de chaleur intérieur (28) comporte, dans une zone d'extrémité axiale de la paroi circonférentielle intérieure (30), une paroi de base intérieure (32) attenante à cette paroi circonférentielle, que le boîtier d'échangeur de chaleur extérieur (34) comporte, dans une zone d'extrémité axiale, une paroi de base extérieure (38) attenante à cette zone d'extrémité, que l'espace de circulation de fluide caloporteur (40) est défini par une paroi frontale (50) dans une zone d'extrémité axiale située à une certaine distance de la paroi de base intérieure (32) et de la paroi de base extérieure (38), et que la paroi frontale (50) est pourvue d'un matériau isolant (66) dans au moins certaines zones de son côté extérieur (68) orienté à l'opposé de l'espace de circulation de fluide caloporteur (40).

3. Dispositif de chauffage de véhicule selon la revendication 1 ou 2, **caractérisé en ce que** le boîtier d'échangeur de chaleur extérieur (34) est pourvu d'un matériau isolant (64) recouvrant le boîtier d'échangeur de chaleur extérieur (34) dans au moins certaines zones de son côté extérieur (62) orienté à l'opposé de l'espace d'écoulement de fluide caloporteur (40).

4. Dispositif de chauffage de véhicule selon l'une des revendications 1 à 3, **caractérisé en ce que** l'unité de chauffage (58) est prévue au moins dans une zone de longueur de la paroi circonférentielle intérieure (30), laquelle zone de longueur chevauche axialement le dispositif de convertisseur catalytique (52).

5. Dispositif de chauffage de véhicule selon l'une des revendications précédentes, **caractérisé en ce qu'**une sonde lambda (56) est prévue autour de laquelle les gaz d'échappement (A) peuvent s'écouler.

6. Procédé pour opérer un dispositif de chauffage de véhicule (10) selon le préambule de la revendication 1 ou l'une des revendications précédentes, dans lequel l'unité de chauffage pouvant être excitée électriquement (58) associée au dispositif de convertisseur catalytique (52) est opérée dans une phase de démarrage de l'opération de combustion ou/et dans une phase de fin de l'opération de combustion ou/et après une extinction de la flamme,
**caractérisé en ce que**
dans la phase finale de l'opération de combustion ou/et en cas d'extinction de la flamme, la puissance calorifique de l'unité de chauffage pouvant être excitée électriquement (52) et associée au dispositif de convertisseur catalytique (52) est augmentée après la fin de la combustion.

7. Procédé selon la revendication 6, **caractérisé en ce que** dans la phase de démarrage de l'opération de combustion ou/et en cas de redémarrage après une extinction de la flamme, la puissance calorifique de l'unité de chauffage pouvant être excitée électriquement (58), prévue en association avec le dispositif de convertisseur catalytique (52), est abaissée après le début de la combustion.
